# EUROPEAN PATENT APPLICATION

(11) **EP 4 050 484 A2**
(43) Date of publication of application: **31.08.2022**
(21) Application number: 22168208.1
(22) Date of filing: 13.04.2022
(51) Int. Cl.: G06F 9/54

(54) **METHOD AND APPARATUS FOR APPLICATION COMMUNICATION, AND STORAGE MEDIUM**

(30) Priority: 16.04.2021 CN 202110412444
(71) Applicant: Apollo Intelligent Connectivity (Beijing) Technology Co., Ltd., Beijing 100176 (CN)
(72) Inventor: PAN, Fan, Beijing, 100176 (CN)
(74) Representative: Maiwald Patent- und Rechtsanwaltsgesellschaft mbH

(57) **Abstract**

The present disclosure provides a method and an apparatus for application communication and a storage medium, which relates to a field of intelligent transportation technology. The specific implementation scheme is: in a process of a first application in a vehicle machine needing to control a second application, the first application may send a notification message including a key-value pair to a second application through a state machine in the vehicle machine, so that when the second application receives a notification message sent by the first application through a state machine, a corresponding operation may be performed by the key-value pair in the notification message. Therefore, communication between a first application and the second application in the vehicle machine may be achieved by a state machine, and a corresponding application is controlled to perform a corresponding operation.

## Description

### TECHNICAL FIELD

The present disclosure relates to a field of computer technologies, and specifically to a field of intelligent transportation technology, and especially to a method and an apparatus for application communication, and a storage medium.

### BACKGROUND

With the development of science and technology and continuous progress of internet technology, service functions of a vehicle machine are gradually increased and strengthened. In a process of using a vehicle machine, there is a scenario where applications on the vehicle machine need to send a message notification to each other, and it is very important how to achieve communication between two applications in the vehicle machine.

### SUMMARY

The present disclosure provides a method and an apparatus for application communication and a storage medium.

According to embodiments of the present disclosure, a method for application communication is provided, the method is applied to a state machine located in a vehicle machine, and the method includes: receiving a notification message of a first application, the notification message includes a key-value pair; acquiring a key in the key-value pair, and determining a second application for monitoring the key, the first application and the second application are different applications in the vehicle machine; and sending the notification message to the second application, to cause the second application to perform a corresponding operation based on the key-value pair.

In some embodiments, acquiring the key in the key-value pair, and determining the second application for monitoring the key includes: acquiring a set of applications for monitoring the notification message of the first application; and acquiring a second application for monitoring the key from the set of applications.

In some embodiments, the method also includes: receiving a registration request of the first application, wherein the registration request comprises the key and the second application for monitoring the notification message of the first application; and adding the second application to the set of applications.

In some embodiments, the method also includes: deleting an application for monitoring the key from the set of applications in response to a request of the first application deregistering the key.

In some embodiments, the method also includes: deleting the second application from the set of applications in response to detecting that the second application ends running.

In some embodiments, the method also includes: deleting the set of applications in response to detecting that the first application ends running.

In some embodiments, the notification message further comprises a package name of the first application.

According to embodiments of the present disclosure, an apparatus for application communication is provided, the apparatus is applied to a state machine located in a vehicle machine, and the apparatus includes: a first receiving module, configured to receive a notification message of a first application, the notification message includes a key-value pair; a determining module, configured to acquire a key in the key-value pair, and determine a second application for monitoring the key, the first application and the second application are different applications in the vehicle machine; and a sending module, configured to send the notification message to the second application, to cause the second application to perform a corresponding operation based on the key-value pair.

In some embodiments, the determining module includes: a first acquiring unit, configured to acquire a set of applications for monitoring the notification message of the first application; and a second acquiring unit, configured to acquire a second application for monitoring the key from the set of applications.

In some embodiments, the apparatus also includes: a second receiving module, configured to receive a registration request of the first application, wherein the registration request comprises the key and the second application for monitoring the notification message of the first application; and an adding module, configured to add the second application to the set of applications.

In some embodiments, the apparatus also includes: a first deletion module, configured to delete an application for monitoring the key from the set of applications in response to a request of the first application deregistering the key.

In some embodiments, the apparatus also includes: a second deletion module, configured to delete the second application from the set of applications in response to detecting that the second application ends running.

In some embodiments, the apparatus also includes: a third deletion module, configured to delete the set of applications in response to detecting that the first application ends running.

In some embodiments, the notification message further comprises a package name of the first application.

According to embodiments of the present disclosure, a non-transitory computer readable storage medium stored with computer instructions is provided. When the computer instructions are executed by a computer, the computer is caused to perform the method for application communication disclosed in embodiments of the present disclosure.

Embodiments of the present disclosure have following advantages or beneficial effects.

During a process that a first application in a vehicle machine needs to control a second application, the first application may send a notification message including a key-value pair to a second application through a state machine in the vehicle machine, so that when the second application receives a notification message sent by the first application through a state machine, a corresponding operation may be performed by the key-value pair in the notification message. Therefore, communication between the first application and the second application in the vehicle machine may be achieved by a state machine, and a corresponding application is controlled to perform a corresponding operation.

It should be understood that, the content described in the part is not intended to identify key or important features of embodiments of the present disclosure, nor intended to limit the scope of the present disclosure. Other features of the present disclosure will be easy to understand through the following specification.

### BRIEF DESCRIPTION OF THE DRAWINGS

The drawings are intended to better understand the solution, and do not constitute a limitation to the present disclosure.
FIG. 1 is a flowchart of a method for application communication provided in an embodiment of the present disclosure;
FIG. 2 is a flowchart of a method for application communication provided in another embodiment of the present disclosure;
FIG. 3 is a diagram of an interaction between an application and a state machine in an embodiment of the present disclosure;
FIG. 4 is a flowchart of a method for application communication provided in another embodiment of the present disclosure;
FIG. 5 is a diagram of a structure of an apparatus for application communication provided in an embodiment of the present disclosure;
FIG. 6 is a structure diagram of an apparatus for application communication provided in another embodiment of the present disclosure;
FIG. 7 is a block diagram of an electronic device configured to achieve a method for application communication in an embodiment of the present disclosure.

### DETAILED DESCRIPTION

The exemplary embodiments of the present disclosure are described as below with reference to the accompanying drawings, which include various details of embodiments of the present disclosure to facilitate understanding, and should be considered as merely exemplary. Therefore, those skilled in the art should realize that various changes and modifications may be made to the embodiments described herein without departing from the scope and spirit of the present disclosure. Similarly, for clarity and conciseness, descriptions of well-known functions and structures are omitted in the following descriptions.

A method and an apparatus for application communication, and a storage medium in the embodiment of the present disclosure are described with reference to drawings.

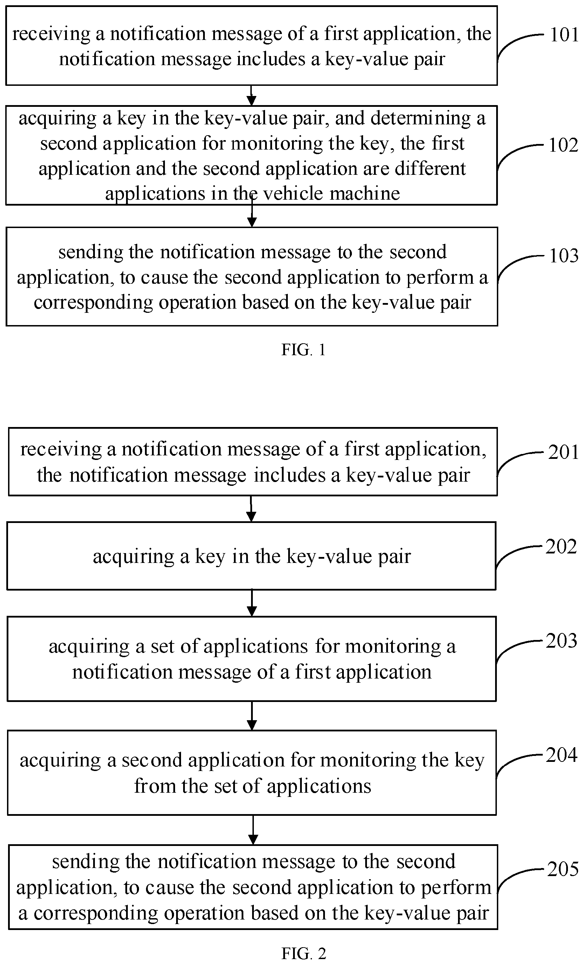

FIG. 1 is a flowchart of a method for application communication provided in an embodiment of the present disclosure. It should be noted that, the method is applied to a state machine located in a vehicle machine.

As illustrated in FIG. 1, the method for application communication may include the following blocks.

At block 101, a notification message of a first application is received, the notification message includes a key-value pair.

At block 102, a key in the key-value pair is acquired, and a second application for monitoring the key is determined, the first application and the second application are different applications in the vehicle machine.

In some embodiments, a second application for monitoring the key may be acquired based on the key in the key-value pair. That is, an application for monitoring the key may be determined based on the key in the key-value pair.

It should be noted that, the first application and the second application in the embodiment may be pre-accessed to the state machine.

At block 103, the notification message is sent to the second application, to cause the second application to perform a corresponding operation based on the key-value pair.

In some embodiments, when the second application receives a message notification sent by the state machine, the second application may parse the notification message to obtain a key-value pair in the notification message, the key-value pair including a key and a corresponding value. Correspondingly, when the second application obtains a key-value pair, an operation type corresponding to the key may be determined based on the key in the key-value pair, and an operation value of the operation type may be determined based on the key value in the key-value pair, and further a corresponding operation may be performed based on the operation type and the corresponding operation value.

For example, the first application is a map application in the vehicle machine, and the second application is a music application in the vehicle machine. Correspondingly, the first application sends the situation of an instruction for pausing music playback to the second application through the state machine, and correspondingly, the first application may generate a corresponding key-value pair based on the instruction, generate a notification message including the key-value pair, and send the notification message to the state machine. At this time, the state machine writes a notification message into a service memory of the state machine, and correspondingly, when the apparatus for application communication detects that there is data in the service memory of the state machine, the apparatus for application communication may read the notification message from the service memory of the state machine, acquire the key of the key-value pair in the notification message, determine a second application for monitoring the key, and send the notification message to the second application. Correspondingly, the second application determines a corresponding operation type and an operation value based on the key-value pair in the notification message upon receiving the notification message, and performs a corresponding operation based on the operation type and the operation value, for example, a music application pauses the music playback.

In the method for application communication in the embodiment of the present disclosure, during a process that the first application in the vehicle machine needs to control the second application, the first application may send a notification message including a key-value pair to the second application through the state machine in the vehicle machine, so that the second application may perform a corresponding operation through the key-value pair in the notification message upon receiving the notification message sent by the first application through the state machine. Therefore, communication between the first application and the second application in the vehicle machine may be achieved through a state machine, and a corresponding application is controlled to perform a corresponding operation.

On the basis of the above embodiment, a plurality of applications may use one key, so as to ensure that the second application accurately performs a corresponding operation based on the application for controlling the second application, and to avoid other applications controlling the second application. In some embodiments, in addition to including a key-value pair, the notification message in the embodiment may further include a package name of a first application, so that the second application may determine whether the package name of the application in the notification message is consistent with the package name of the application that may control the notification message upon receiving the notification message, and when both are consistent, a corresponding operation is performed based on the key-value pair. Therefore, the second application may distinguish an application for sending the notification message based on the package name of the application in the notification message, so as to avoid confusion.

It should be understood that, when the second application determines that the package name of the application in the message notification is inconsistent with the package name of the application that may control the second application, no processing is performed on the second application.

FIG. 2 is a flowchart of a method for application communication provided in another embodiment of the present disclosure. It should be noted that, the method is applied to a state machine located in a vehicle machine.

As illustrated in FIG. 2, the method for application communication may include the following blocks.

At block 201, a notification message of a first application is received, the notification message includes a key-value pair.

At block 202, a key in the key-value pair is acquired.

At block 203, a set of applications for monitoring a notification message of a first application is acquired.

In some embodiments, a set of applications for monitoring a notification message of a first application may be acquired from a preset monitoring relationship based on the identity information of the first application upon receiving a notification message of a first application.

A monitoring relationship between applications is saved in the monitoring relationship.

At block 204, a second application for monitoring the key is acquired from the set of applications.

In the embodiment, the first application and the second application are different applications in the vehicle machine.

At block 205, the notification message is sent to the second application, to cause the second application to perform a corresponding operation based on the key-value pair.

In the method for application communication in the embodiment of the present disclosure, in a process of the first application in the vehicle machine needing to control the second application, the first application may send a notification message including a key-value pair to the second application through the state machine in the vehicle machine, and correspondingly, the state machine acquires a key in the key-value pair, and acquires a set of applications for monitoring a notification message of a first application, and acquires a second application for monitoring the key from the set of applications, and sends the notification message to the second application. In this way, the second application performs a corresponding operation based on the key-value pair. Therefore, communication between the first application and the second application in the vehicle machine may be achieved through a state machine, and a corresponding application is controlled to perform a corresponding operation.

On the basis of the embodiment as illustrated in FIG. 2, in some embodiments, the method for application communication may further receive a registration request of the first application, the registration request includes the key and the second application for monitoring the notification message of the first application; and the second application is added to the set of applications. Thereby, management of an application in a state machine is achieved.

In one embodiment of the present disclosure, in order to release the memory of the vehicle machine, the method may further delete an application for monitoring the key in the set of applications in response to a request of the first application deregistering the key.

Specifically, when the first application ends using the key, the first application may send a request of deregistering the key to the state machine. Correspondingly, the state machine deletes application information for monitoring the key in the set of applications for monitoring a notification message of the first application. Therefore, management of application information for monitoring the key in the state machine is achieved, and a memory is released in time.

In one embodiment of the present disclosure, in order to manage the monitoring relationship of applications in the state machine and release the memory in time, in some embodiments, the method may further delete a second application in the set of applications in response to detecting that the second application ends running, and end communication between the first application and the second application in time, and release a memory in time.

In one embodiment of the present disclosure, in order to manage the monitoring relationship of applications in the state machine and release the memory in time, in some embodiments, a set of applications is deleted in response to detecting that the second application ends running.

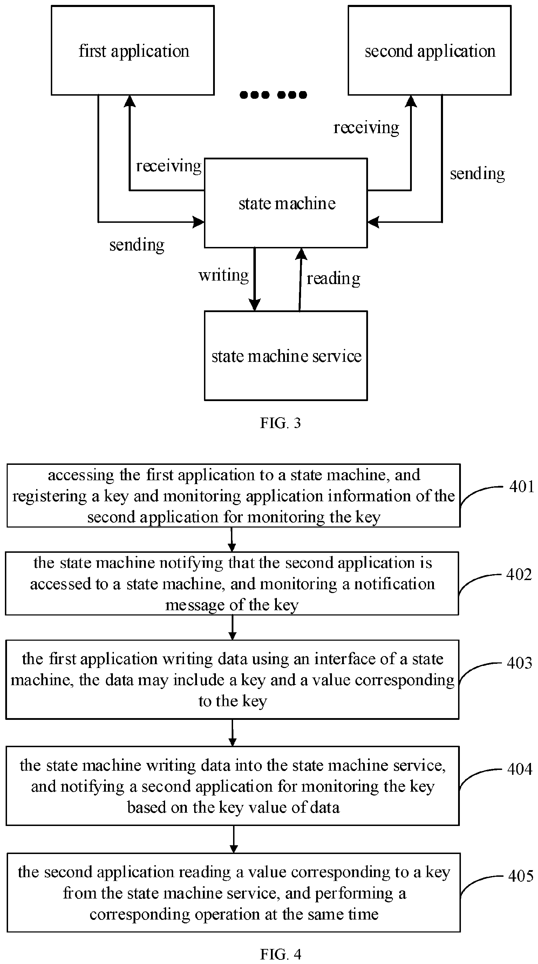

In order to make those skilled in the art understand the present disclosure clearly, in combination with the description of the method for application communication in FIG. 3 and FIG. 4.

It should be noted that, the first application and the second application in the vehicle machine in FIG. 3 are accessed to a state machine, and the state machine communicates with the state machine service configured to save a notification message. The first application and the second application in the embodiment are any two applications in a plurality of applications in the vehicle machine.

As illustrated in FIG. 4, the method may include the following blocks.

At block 401, the first application is accessed to a state machine, and a key is registered and application information of the second application for monitoring the key is monitored.

In some embodiments, when a first application is started, the first application may be accessed to a state machine.

The state machine in the embodiment is configured to provide communication service between applications in the vehicle machine, and store the notification message in the application communication process.

At block 402, the state machine notifies that the second application is accessed to a state machine, and monitors a notification message of the key.

At block 403, the first application writes data using an interface of a state machine, the data may include a key and a value corresponding to the key.

At block 404, the state machine writes data into the state machine service, and notifies a second application for monitoring the key based on the key value of data.

At block 405, the second application reads a value corresponding to a key from the state machine service, and performs a corresponding operation at the same time.

In the embodiment, communication between the first application and the second application accessed to a state machine may be achieved through a state machine.

It may be understood that, the first application in the embodiment may further receive a notification message sent by a second application, and performs a corresponding operation based on the key-value pair in the notification information.

In order to achieve the above embodiment, the embodiment of the present disclosure further provides an apparatus for application communication.

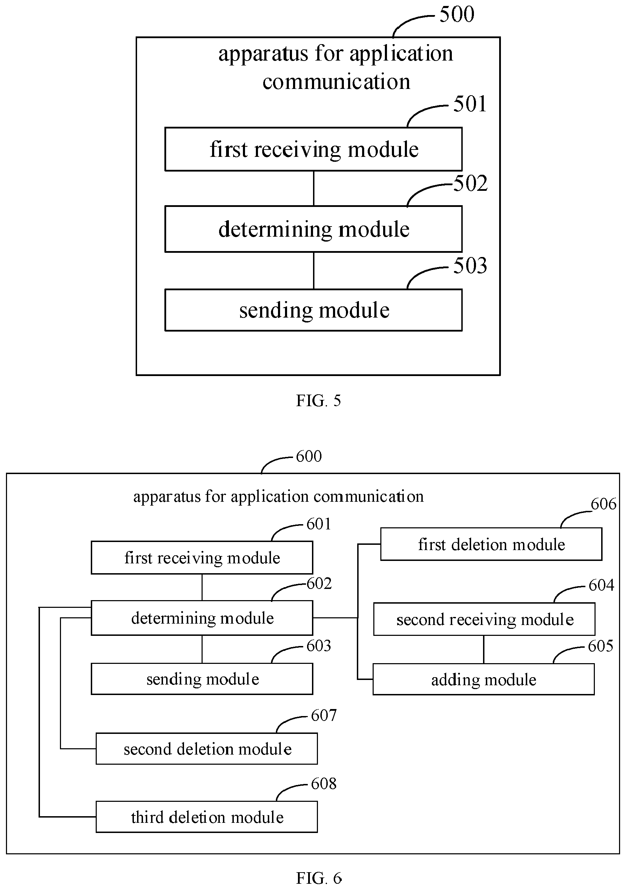

FIG. 5 is a diagram of a structure of an apparatus for application communication provided in one embodiment of the present disclosure. It should be noted that, the above apparatus is applied to a state machine located in a vehicle machine.

As illustrated in FIG. 5, the apparatus 500 for application communication may include a first receiving module 501, a determining module 502 and a sending module 503.

The first receiving module 501 is configured to receive a notification message of a first application, the notification message includes a key-value pair.

The determining module 502 is configured to acquire a key in the key-value pair, and determine a second application for monitoring the key, the first application and the second application are different applications in the vehicle machine.

The sending module 503 is configured to send the notification message to the second application, to cause the second application to perform a corresponding operation based on the key-value pair.

It should be noted that, the foregoing explanation of the embodiment of a method for application communication is also applied to the embodiment, which will not be repeated here.

In the apparatus for application communication in the embodiment of the present disclosure, in the process of the first application in the vehicle machine needing to control the second application, the first application may send a notification message including a key-value pair to the second application through the state machine in the vehicle machine, so that the second application may perform the corresponding operation through the key-value pair in the notification message upon receiving the notification message sent by the first application through the state machine. Therefore, communication between the first application and the second application in the vehicle machine may be achieved through a state machine, and a corresponding application is controlled to perform a corresponding operation.

In one embodiment of the present disclosure, as illustrated in FIG. 6, the apparatus for application communication may include a first receiving module 601, a determining module 602, a sending module 603, a second receiving module 604, an adding module 605, a first deletion module 606, a second deletion module 607 and a third deletion module 608. The determining module 602 may include a first acquiring unit 6021 and a second acquiring unit 6022.

With respect to the detailed description of the first receiving module 601 and the sending module 603, please refer to the description of the first receiving module 501 and the sending module 503 in the embodiment as illustrated in FIG. 5, which is not described here.

In one embodiment of the present disclosure, the determining module 602 may include a first acquiring unit 6021 and a second acquiring unit 6022.

The first acquiring unit 6021 is configured to acquire a set of applications for monitoring the notification message of the first application; and the second acquiring unit 6022 is configured to acquire a second application for monitoring the key from the set of applications.

In an embodiment of the present disclosure, as illustrated in FIG. 6, the apparatus may further include a second receiving module 604 and an adding module 605.

The second receiving module 604 is configured to receive a registration request of the first application, the registration request includes the key and the second application for monitoring the notification message of the first application; and the adding module 605 is configured to add the second application to the set of applications.

In an embodiment of the present disclosure, as illustrated in FIG. 6, the apparatus may further include a first deletion module 606.

The first deletion module 606 is configured to delete an application for monitoring the key in the set of applications in response to a request of the first application deregistering the key.

In one embodiment of the present disclosure, as illustrated in FIG. 6, the apparatus may further include a second deletion module 607.

The second deletion module 607 is configured to delete the second application in the set of applications in response to detecting that the second application ends running.

In one embodiment of the present disclosure, as illustrated in FIG. 6, the apparatus may further include a third deletion module 608.

The third deletion module 608 is configured to delete the set of applications in response to detecting that the first application ends running.

In one embodiment of the present disclosure, the notification message further includes a package name of the first application.

It needs to be noted that the foregoing explanation of the method embodiments for application communication is also applied to an apparatus for application communication in the embodiment, which will not be repeated here.

According to the embodiments of the present disclosure, the present disclosure further provides an electronic device, a readable storage medium and a computer program product.

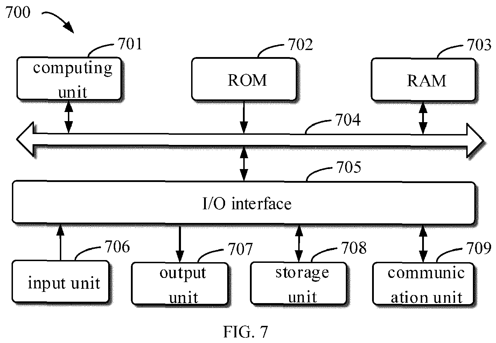

FIG. 7 illustrates a schematic block diagram of an example electronic device 700 configured to execute the embodiment of the present disclosure. An electronic device is intended to represent various types of digital computers, such as laptop computers, desktop computers, workstations, personal digital assistants, servers, blade servers, mainframe computers, and other suitable computers. An electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the present disclosure described and/or required herein.

As illustrated in FIG. 7, a device 700 includes a computing unit 701, configured to execute various appropriate actions and processes according to a computer program stored in a read-only memory (ROM) 702 or loaded from a storage unit 708 to a random access memory (RAM) 703. In the RAM 703, various programs and data required for operation of the device 700 may also be stored. A computing unit 701, a ROM 702 and a RAM 703 may be connected with each other by a bus 704. An input/output (I/O) interface 705 is also connected to a bus 704.

A plurality of components in the device 700 are connected to an I/O interface 705, and includes: an input unit 706, for example, a keyboard, a mouse, etc.; an output unit 707, for example various types of displays, speakers; a storage unit 708, for example a magnetic disk, an optical disk; and a communication unit 709, for example, a network card, a modem, a wireless transceiver. The communication unit 709 allows a device 700 to exchange information/data through a computer network such as internet and/or various types of telecommunication networks and other devices.

The computing unit 701 may be various types of general and/or dedicated processing components with processing and computing ability. Some examples of a computing unit 701 include but not limited to a central processing unit (CPU), a graphics processing unit (GPU), various dedicated artificial intelligence (AI) computing chips, various computing units running a machine learning model algorithm, a digital signal processor (DSP), and any appropriate processor, controller, microcontroller, etc. The computing unit 701 performs various methods and processings as described above, for example, a method for application communication. For example, in some embodiments, a method for application communication may be further achieved as a computer software program, which is physically contained in a machine readable medium, such as a storage unit 708. In some embodiments, a part or all of the computer program may be loaded and/or installed on the device 700 via a ROM 702 and/or a communication unit 709. When the computer program is loaded on a RAM 703 and performed by a computing unit 701, one or more blocks in the method for application communication may be performed. Alternatively, in other embodiments, the computing unit 701 may be configured to perform a method for application communication in other appropriate ways (for example, by virtue of a firmware).

Various implementation modes of the systems and technologies described above may be achieved in a digital electronic circuit system, a field programmable gate array (FPGA), an application-specific integrated circuit (ASIC), an application specific standard product (ASSP), a system-on-chip (SOC) system, a complex programmable logic device, a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

A computer code configured to execute a method in the present disclosure may be written with one or any combination of a plurality of programming languages. The programming languages may be provided to a processor or a controller of a general purpose computer, a dedicated computer, or other apparatuses for programmable data processing so that the function/operation specified in the flowchart and/or block diagram may be performed when the program code is executed by the processor or controller. A computer code may be performed completely or partly on the machine, performed partly on the machine as an independent software package and performed partly or completely on the remote machine or server.

In the context of the present disclosure, a machine-readable medium may be a tangible medium that may contain or store a program intended for use in or in conjunction with an instruction execution system, apparatus, or device. A machine readable medium may be a machine readable signal medium or a machine readable storage medium. A machine readable storage medium may include but not limited to an electronic, magnetic, optical, electromagnetic, infrared, or semiconductor system, apparatus or device, or any appropriate combination thereof. A more specific example of a machine readable storage medium includes an electronic connector with one or more cables, a portable computer disk, a hardware, a random access memory (RAM), a read-only memory (ROM), an erasable programmable read-only memory (an EPROM or a flash memory), an optical fiber device, and a portable optical disk read-only memory (CDROM), an optical storage device, a magnetic storage device, or any appropriate combination of the above.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a speech input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), an internet and a blockchain network.

The computer system may include a client and a server. The client and server are generally far away from each other and generally interact with each other through a communication network. The relationship between the client and the server is generated by computer programs running on the corresponding computer and having a client-server relationship with each other. A server may be a cloud server, also known as a cloud computing server or a cloud host, is a host product in a cloud computing service system, to solve the shortcomings of large management difficulty and weak business expansibility existed in the conventional physical host and Virtual Private Server (VPS) service. A server further may be a server with a distributed system, or a server in combination with a blockchain.

It should be noted that, Artificial intelligence(AI) is a subject that learns simulating certain thinking processes and intelligent behaviors (such as learning, reasoning, thinking, planning, etc.) of human beings by a computer, which covers hardware-level technologies and software-level technologies. AI hardware technologies generally include technologies such as sensors, dedicated AI chips, cloud computing, distributed storage, big data processing, etc.; AI software technologies mainly include computer vision technology, speech recognition technology, natural language processing(NLP) technology and machine learning(ML), deep learning(DL), big data processing technology, knowledge graph(KG) technology, etc.

It should be understood that, various forms of procedures shown above may be configured to reorder, add or delete blocks. For example, blocks described in the present disclosure may be executed in parallel, sequentially, or in different orders, as long as the desired result of the technical solution disclosed in the present disclosure may be achieved, which will not be limited herein.

The above specific implementations do not constitute a limitation on the protection scope of the present disclosure. Those skilled in the art should understand that various modifications, combinations, sub-combinations and substitutions may be made according to design requirements and other factors.

## Claims

1. A method for application communication, applied to a state machine located in a vehicle machine, and comprising
receiving (101) a notification message of a first application, wherein, the notification message comprises a key-value pair;
acquiring (102) a key in the key-value pair, and determining a second application for monitoring the key, wherein, the first application and the second application are different applications in the vehicle machine; and
sending (103) the notification message to the second application, to cause the second application to perform a corresponding operation based on the key-value pair.

2. The method of claim 1, wherein, acquiring (102) the key in the key-value pair, and determining the second application for monitoring the key, comprise:
acquiring (203) a set of applications for monitoring the notification message of the first application; and
acquiring (204) a second application for monitoring the key from the set of applications.

3. The method of claim 2, further comprising:
receiving a registration request of the first application, wherein the registration request comprises the key and the second application for monitoring the notification message of the first application; and
adding the second application to the set of applications.

4. The method of claim 2 or 3, further comprising:
deleting an application for monitoring the key from the set of applications in response to a request of the first application deregistering the key.

5. The method of any of claims 2 to 4, further comprising:
deleting the second application from the set of applications in response to detecting that the second application ends running.

6. The method of any of claims 2 to 5, further comprising:
deleting the set of applications in response to detecting that the first application ends running.

7. The method of any of claims 1 to 6, wherein, the notification message further comprises a package name of the first application.

8. An apparatus for application communication, applied to a state machine located in a vehicle machine, and comprising:
a first receiving module (501), configured to receive a notification message of a first application, wherein, the notification message comprises a key-value pair;
a determining module (502), configured to acquire a key in the key-value pair, and determine a second application for monitoring the key, wherein, the first application and the second application are different applications in the vehicle machine; and
a sending module (503), configured to send the notification message to the second application, to cause the second application to perform a corresponding operation based on the key-value pair.

9. The apparatus of claim 8, wherein, the determining module comprises:
a first acquiring unit (6021), configured to acquire a set of applications for monitoring the notification message of the first application; and
a second acquiring unit (6022), configured to acquire a second application for monitoring the key from the set of applications.

10. The apparatus of claim 9, further comprising:
a second receiving module (604), configured to receive a registration request of the first application, wherein the registration request comprises the key and the second application for monitoring the notification message of the first application; and
an adding module (605), configured to add the second application to the set of applications.

11. The apparatus of claim 9 or 10, further comprising:
a first deletion module (606), configured to delete an application for monitoring the key from the set of applications in response to a request of the first application deregistering the key.

12. The apparatus of any of claims 9 to 11, further comprising:
a second deletion module (607), configured to delete the second application from the set of applications in response to detecting that the second application ends running.

13. The apparatus of any of claims 9 to 12, further comprising:
a third deletion module (608), configured to delete the set of applications in response to detecting that the first application ends running.

14. The apparatus of any of claims 9 to 13, wherein, the notification message further comprises a package name of the first application.

15. A non-transitory computer readable storage medium stored with computer instructions, wherein when the computer instructions are executed by a computer, the computer is caused to perform the method of any of claims 1 to 7.
